# FASCICULE DE BREVET EUROPEEN

(11) **EP 2 360 890 B1**
(45) Date de publication et mention de la délivrance du brevet: **06.05.2020**
(21) Numéro de dépôt: 11153659.5
(22) Date de dépôt: 08.02.2011
(51) Int. Cl.: H04L 29/06, G06F 21/00

(54) **CRÉATION ET UTILISATION D'UN ESPACE DE PARTAGE AUTOUR D'AU MOINS UN CONTENU ASSOCIÉ À UN UTILISATEUR SOURCE POUR DES UTILISATEURS DESTINATAIRES**
Erstellung und Nutzung eines gemeinsamen Raums basierend auf zumindest einem, einem Quellenbenutzer zugeordnete Inhalts bestimmt für mehrere Zielbenutzer.
Creation and utilisation of a shared space around at least one content associated with a source user for target users.

(30) Priorité: 15.02.2010 FR 1051058
(43) Date de publication de la demande: 24.08.2011
(73) Titulaire: Orange, 75015 Paris (FR)
(72) Inventeur: Tarrago, Aline, 94260 Fresnes (FR); Combet, Laurent, 75017 Paris (FR); Meyer, Roland, 06000 Nice (FR)

(56) Documents cités:
- GB-A- 2 409 746
- US-A1- 2009 192 845
- US-A1- 2009 307 361
- Japanese Online Institute: "JOI. Learn Japanese live online: About us, FlexLessons, Class Features, How to enroll", , [Online] 14 février 2007 (2007-02-14), XP002605407, Extrait de l'Internet: URL:www.japonin.com> [extrait le 2010-10-15]

## Description

### Domaine technique

L'invention concerne la création et l'utilisation d'un espace de partage autour d'au moins un contenu associé à un utilisateur source pour des utilisateurs destinataires. En particulier, l'invention concerne la création d'un espace de partage synchrone autour d'au moins un contenu.

### Technique antérieure

Le partage de contenus sur Internet se fait notamment en donnant accès à des contenus sur son propre terminal dans un espace de partage pour lequel un accès spécifique est défini par envoi au destinataire de l'adresse auquel il peut accéder audit contenu.

Afin de sécuriser les terminaux personnels, des fournisseurs de services mettent à disposition des espaces de partages de stockage de contenus autorisant le partage. A un ou plusieurs contenus sont associé, l'adresse email de l'invité auquel est envoyé un message de partage de contenu comportant l'adresse du contenu partagé.

L'ensemble de ces solutions permettent seulement de savoir a posteriori si le contenu a été visité et donc d'établir une communication asynchrone à propos du contenu visité indépendante de l'espace de partage. US 2009192845 divulgue la préparation d'une réunion en ligne par un premier utilisateur qui sélectionne des documents dans un espace de travail partagé et initie la réunion en ligne. Une invitation est envoyée aux autres utilisateurs comportant un lien permettant de se joindre à la session de communication et un deuxième lien permettant d'accéder à l'espace de travail partagé.

### Résumé de l'invention

Un des buts de la présente invention est d'apporter des améliorations par rapport à l'état de la technique.

Un objet de l'invention est également un procédé de création d'un espace de partage autour d'au moins un contenu selon la revendication 1.

Ainsi, lorsqu'un utilisateur source souhaite partager un contenu, un espace de partage est créé comportant tout les éléments concernant un ou plusieurs contenus c'est-à-dire les données contenu lui-même (les données du contenu ou une adresse d'accès au données du contenu) et des attributs comportant notamment le lien entre l'utilisateur source et un utilisateur destinataire avec qui il souhaite partager le contenu. L'espace de partage crée permet donc, grâce à l'association en son sein du contenu et du lien, de définir l'utilisation du contenu par l'utilisateur destinataire permettant une communication synchrone entre l'utilisateur destinataire et l'utilisateur source autour du contenu lors de cette utilisation. Cet espace de partage étant défini pour un partage spécifique, il permet d'optimiser la situation dans le réseau de télécommunication des contenus à partager en terme d'accès au(x) contenu(s) de cet espace de partage par les utilisateurs de cet espace de partage et la communication entre les utilisateurs de cet espace de partage.

En outre, un utilisateur source souhaitant partager un contenu et son utilisateur destinataire dispose des moyens pour converser autour du contenu via un réseau de communication comme ils le feraient dans le salon de l'utilisateur source aussi appelé utilisateur source prolongeant ainsi des habitudes relationnelle du monde réel dans le monde créé par les réseaux de télécommunication.

Avantageusement, le procédé de création d'espace de partage comporte une association d'une plage temporelle d'utilisation audit espace de partage.

Ainsi, l'utilisateur source peut planifier un rendez vous autour d'un ou plusieurs contenus.

Avantageusement, selon une implémentation de l'invention, les différentes étapes du procédé selon l'invention sont mises en œuvre par un logiciel ou programme d'ordinateur, ce logiciel comprenant des instructions logicielles destinées à être exécutées par un processeur de données d'un dispositif d'un réseau de télécommunication et étant conçus pour commander l'exécution des différentes étapes de ce procédé.

L'invention vise donc aussi un programme comprenant des instructions de code de programme pour l'exécution des étapes du procédé de création d'espace de partage autour d'au moins un contenu lorsque ledit programme est exécuté par un processeur.

Un autre objet de l'invention est un procédé d'utilisation d'un espace de partage autour d'au moins un contenu selon la revendication 3.

Ainsi, lorsqu'un utilisateur destinataire accède audit espace de partage, une opportunité est ouverte pour l'utilisateur source et l'utilisateur destinataire de converser sans délai dans cet espace de partage autour du contenu accédé.

Avantageusement, le procédé d'utilisation d'espace de partage comporte une notification dudit utilisateur source lorsque ledit utilisateur destinataire accède à un contenu dudit espace de partage, ladite notification étant apte à permettre l'établissement de ladite communication synchrone entre ledit utilisateur source et ledit utilisateur destinataire.

Ainsi, l'utilisateur source est automatiquement prévenu que le contenu partagé est visité et qu'il peut se mettre en communication synchrone avec l'utilisateur destinataire qui visite le contenu.

Ainsi, l'utilisateur source et l'utilisateur destinataire disposent ensemble du même contenu, notamment utilisent ensemble la même application, autour duquel ils conversent..

Avantageusement, pour un type d'accès réunion de groupe, la session de communication est une session de communication multiutilisateurs mettant en relation l'utilisateur source et l'ensemble des utilisateurs destinataires accédant au contenu associé à de type d'accès spécifique.

Ainsi, un utilisateur source peut décider de réunir plusieurs utilisateurs destinataire autour d'un même contenu pour échanger ensemble sur ce contenu.

Avantageusement, le procédé d'utilisation d'espace de partage comporte une modification du type d'accès à un ou plusieurs contenus et des liens associés à un contenu lorsque l'utilisateur source accède à un contenu d'un espace de partage autour d'au moins un contenu d'un autre utilisateur source selon un type d'accès en réunion de groupe l'autorisant.

Ainsi, lorsqu'un utilisateur destinataire participe à une soirée autour d'un contenu d'un utilisateur source qui a réunit plusieurs utilisateurs autour de ce contenu en accès réunion de groupe et qu'il est lui-même: L'invité apporte ses contenus.

Avantageusement, le procédé d'utilisation d'espace de partage comporte une notification dudit utilisateur source lorsque ledit utilisateur destinataire accède à un contenu dudit espace de partage, ladite notification étant apte à permettre de déclencher l'établissement de ladite communication synchrone entre ledit utilisateur source et ledit utilisateur destinataire.

Ainsi, lorsque l'utilisateur destinataire accède à l'album photo mis à sa disposition par l'utilisateur source dans son espace de partage, l'utilisateur source est non seulement notifié de la présence de l'utilisateur destinataire dans son espace de partage mais se voit offrir l'opportunité d'échanger avec l'utilisateur destinataire lors de sa consultation de l'album photo comme il le ferait à la maison lorsque son invité feuilleté son album photo. Pour ce faire, la notification comporte, par exemple, un clic to exchange qui peut être un clic to call, clic to im, etc.

Avantageusement, ladite notification est apte à permettre de déclencher un accès simultané (M64) par ledit utilisateur source audit contenu accédé par l'utilisateur destinataire.

Ainsi, non seulement, l'utilisateur source et l'utilisateur destinataire peuvent échanger autour du contenu partagé, par exemple l'album photo, mais peuvent aussi le consulter ensemble, par exemple feuilleter en ensemble l'album photo, l'utilisateur source arrivera sur l'album photo à la photo que l'utilisateur destinataire est en train de visionner et gardera le même contexte que l'utilisateur dentinaire c'est-à-dire que si l'utilisateur destinataire passe à la photo suivante, l'utilisateur source verra lui aussi la photo suivante simultanément, si l'utilisateur destinataire ajoute une photo (par exemple suite à des vacances ensemble), l'utilisateur source verra simultanément les manipulations de l'application par l'utilisateur destinataire pour ajouter la photo et la nouvelle photo. Pour ce faire, la notification comporte notamment un clic to access.

Avantageusement, le procédé d'utilisation d'espace de partage comporte un transfert de l'utilisateur source utilisateur vers un utilisateur délégué, ledit transfert permettant de transférer du premier utilisateur à l'utilisateur délégué l'autorisation d'un établissement de communication synchrone dans l'utilisation dudit espace de partage,

Ainsi, une infirmière peut mettre à disposition de ces patients dans le cadre d'un service d'aide médical une application de mesure de données médicales et transférer certains patients à un stagiaire. Le stagiaire pourra alors se mettre en relation avec le patient lorsque celui-ci viendra utiliser l'application de mesure pour éventuellement l'aider.

Avantageusement, selon une implémentation de l'invention, les différentes étapes du procédé selon l'invention sont mises en œuvre par un logiciel ou programme d'ordinateur, ce logiciel comprenant des instructions logicielles destinées à être exécutées par un processeur de données d'un dispositif d'un réseau de télécommunication et étant conçus pour commander l'exécution des différentes étapes de ce procédé.

L'invention vise donc aussi un programme comprenant des instructions de code de programme pour l'exécution des étapes du procédé d'utilisation d'un espace de partage autour d'au moins un contenu lorsque ledit programme est exécuté par un processeur.

Un objet de l'invention est en outre un procédé de gestion de partage de contenus selon la revendication 10.

Ainsi, un même utilisateur peut gérer de manière uniforme plusieurs espace de partages de partage autour d'au moins un contenu comportant des contenus identiques ou différents avec des utilisateurs destinataires identiques ou différents en fonction des contenus de chaque espace de partage.

Avantageusement, selon une implémentation de l'invention, les différentes étapes du procédé selon l'invention sont mises en œuvre par un logiciel ou programme d'ordinateur, ce logiciel comprenant des instructions logicielles destinées à être exécutées par un processeur de données d'un dispositif d'un réseau de télécommunication et étant conçus pour commander l'exécution des différentes étapes de ce procédé.

L'invention vise donc aussi un programme comprenant des instructions de code de programme pour l'exécution des étapes du procédé de gestion de partage de contenus lorsque ledit programme est exécuté par un processeur.

Ces programmes peuvent utiliser n'importe quel langage de programmation et être sous la forme de code source, code objet ou code intermédiaire entre code source te code objet tel que dans une forme partiellement compilée ou dans n'importe quelle autre forme souhaitable.

L'invention vise aussi, pour un ou plusieurs de ces programmes, un ou plusieurs supports d'informations.

Les supports d'informations peuvent être n'importe quelles entités ou dispositifs de communication capable de stocker le programme. Par exemple, les supports peuvent comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, les supports d'informations peuvent être des supports transmissibles tels qu'un signal électrique ou optique qui peut être acheminé via un câble électrique ou optique, par radio ou par d'autres moyens. Les programmes selon l'invention peuvent être en particulier téléchargés sur un réseau notamment de type Internet.

Alternativement, les supports d'informations peuvent être des circuits intégrés dans lesquels un ou plusieurs des programmes sont incorporés, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonction selon la description ci-dessous. Un composant matériel correspond à tout élément d'un ensemble matériel (ou hardware) apte à mettre en œuvre une fonction ou un ensemble de fonctions.

L'invention a pour objet un dispositif d'un réseau de télécommunication caractérisé en ce que ledit dispositif du réseau de télécommunication comporte des moyens de génération d'au moins un espace de partage autour d'au moins un contenu associé à un utilisateur source d'un réseau de télécommunication en associant un lien entre ledit utilisateur source et au moins un utilisateur destinataire d'un réseau de télécommunication pour un type d'accès à un contenu dudit espace de partage, ladite association étant apte à permettre un déclenchement par l'accès d'un utilisateur destinataire à un contenu dudit espace de partage d'une autorisation d'un établissement de communication synchrone entre ledit utilisateur source et un utilisateur destinataire d'un réseau de télécommunication dans une utilisation dudit espace de partage.

L'invention a aussi pour objet un dispositif de gestion d'un service de partage de contenus comportant un dispositif d'un réseau de communication tel que décrit ci-dessus.

L'invention a en outre pour objet un dispositif de communication d'un utilisateur source comportant un dispositif du réseau de télécommunication tel que décrit ci dessus.

Avantageusement, le dispositif de communication comporte des moyens de stockages des contenus dudit espace de partage autour d'au moins un contenu.

### Brève description des dessins

Les caractéristiques et avantages de l'invention apparaîtront plus clairement à la lecture de la description, faite à titre d'exemple, et des figures s'y rapportant qui représentent :
- Figure 1, un schéma simplifié d'espace de partage autour d'au moins un contenu selon l'invention,
- Figure 2, un schéma détaillé mais non exhaustif d'un mode de réalisation d'un procédé de création d'un espace de partage autour d'au moins un contenu selon l'invention,
- Figures 3a, 3b et 3c, des exemples d'interfaces permettant la création d'un espace de partage autour d'au moins un contenu selon l'invention, respectivement une interface d'accès à l'ensemble des contenus disponible pour un utilisateur, une interface de gestion du partage d'un contenu, une interface de partage de contenus au sein d'une réunion de groupe,
- Figure 4, un schéma détaillé mais non exhaustif d'un mode de réalisation d'un procédé d'utilisation d'un espace de partage autour d'au moins un contenu selon l'invention,
- Figure 5, un schéma simplifié de création et utilisation d'un espace de partage autour d'au moins un contenu selon l'invention,
- Figure 6, une interface d'utilisation par un utilisateur destinataire d'un espace de partage autour d'au moins un contenu selon l'invention,
- Figure 7, un schéma simplifié d'utilisation et une interface d'utilisation par un utilisateur source d'un espace de partage autour d'au moins un contenu selon l'invention,
- Figure 8, des exemples d'échanges durant la création et l'utilisation d'espace de partage autour de contenus selon l'invention,
- Figure 9, un schéma simplifié d'espace de partages de partage autour de contenus et d'un dispositif d'un réseau de télécommunication selon l'invention,

### Description des modes de réalisation

Les variantes de l'invention décrites ci après pourront être mise en oeuvre seule ou en combinaison.

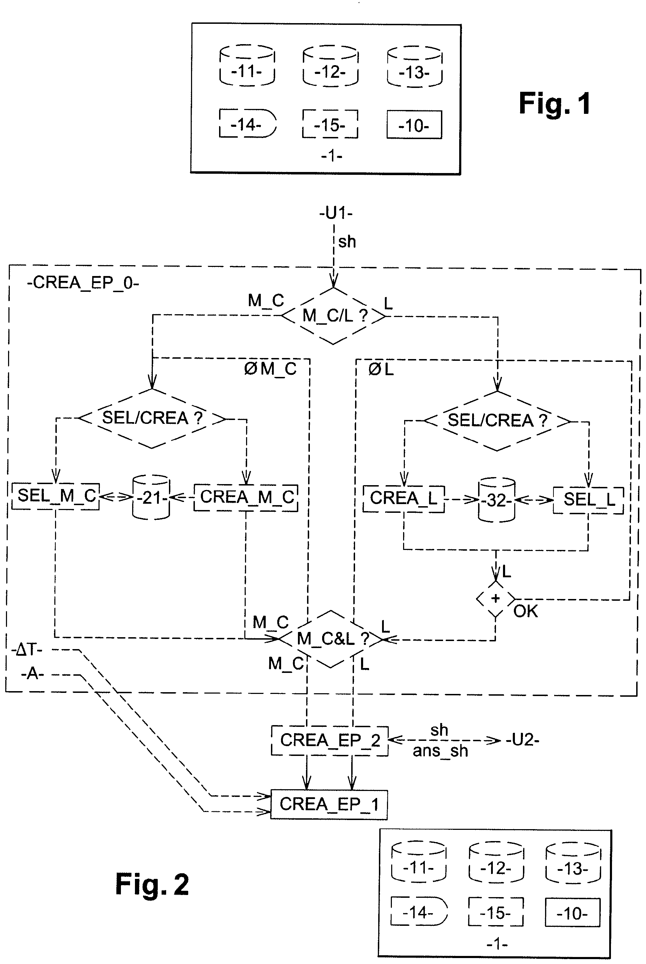

La figure 1 illustre un schéma simplifié d'espace de partage autour d'au moins un contenu selon l'invention. Un espace de partage 1 autour d'au moins un contenu M_C (non illustré) comporte au moins des moyens de déclenchement 10 par l'accès d'un utilisateur destinataire à un contenu M_C dudit espace de partage 1 d'une autorisation d'un établissement de communication synchrone entre ledit utilisateur source et un utilisateur destinataire d'un réseau de télécommunication dans une utilisation dudit espace de partage, ledit accès ayant été autorisé par un lien entre ledit utilisateur source et ledit utilisateur destinataire associé audit contenu pour ce type d'accès.

Ainsi, le contenu M_C est définit en tant qu'espace de partage 1 virtuel et agrégé (les éléments composant le contenu peuvent être stockés à plusieurs endroits dans le réseau), qui permet de définir la présence de l'utilisateur destinataire visitant le contenu. Cet espace de partage est configuré par l'utilisateur source, détenteur du contenu.

Dans un mode de réalisation particulier, l'espace de partage 1 comporte une mémoire ou une base de données de contenus 11 comportant ledit au moins un contenu M_C ou une adresse AdC permet d'accéder audit contenu au travers dudit espace de partage 1.

Ainsi, l'espace de partage 1 est une prolongation d'un contenu M_C permettant non seulement de définir son utilisation mais aussi comportant des moyens permettant de faciliter cette utilisation, en particulier les moyens de déclenchement d'autorisation d'établissement de communication synchrone qui permettent lors de l'utilisation du contenu par un utilisateur destinataire (personne autorisée) de faciliter la mise en place d'une conversation synchrone autour de ce contenu entre l'utilisateur source et le ou les utilisateurs destinataires.

De manière plus générale, un espace de partage 1 est, de la même manière, une prolongation mais d'un ensemble de contenus.

Dans un mode de réalisation particulier, l'espace de partage 1 comporte une mémoire ou une base de données de liens 12 comportant ledit au moins un lien L entre ledit utilisateur source U1 et un utilisateur destinataire U2 ou une adresse AdL permet d'accéder audit lien L au travers dudit espace de partage 1.

Dans un mode de réalisation particulier, l'espace de partage 1 comporte une mémoire ou une base de données d'accès 13 comportant au moins le type d'accès A associé à un lien L autorisé à accéder à au moins un contenu M_C dudit espace de partage 1.

Notamment, les types d'accès A peuvent être des accès :
- en lecture,
- en écriture,
- en modification de certains éléments prédéfinis du contenu (par exemple des champs de remplissage d'un formulaire, des parties attribuées à l'utilisateur destinataire d'une présentation, etc.),
- en interaction autorisant l'utilisation d'un ensemble de commandes telles des commandes de pause, stop, avance et recul rapide, saut de chapitre etc. d'une vidéo, d'une bande sonore, des commandes de défilement automatique ou manuel, saut à une diapositive, etc. d'une présentation, des commandes de participation à un jeu vidéo, etc.,
- en réunion de lien mode participant donnant des droits d'accès en lecture et en interaction, tels que décrits dans le point précédent, sur le contenu sur une durée limitée,
- en réunion de lien mode spectateur donnant des droits d'accès en lecture sur le contenu,
- en réunion mode collaborateur donnant des droits d'accès en lecture, en écriture sur le contenu sur une durée limitée,
- en réunion de lien mode collaborateur partiel donnant des droits d'accès et en en modification de certains éléments prédéfinis du contenu sur une durée limitée,
- en réunion de groupe mode participant ou présentateur donnant des droits d'accès en lecture et en interaction, tels que décrits dans le point précédent, sur le contenu sur une durée limitée
- en réunion de groupe mode spectateur donnant des droits d'accès en lecture sur le contenu sur une durée limitée,
- en réunion de groupe mode collaborateur donnant des droits d'accès en lecture, en écriture sur le contenu sur une durée limitée,
- en réunion de groupe mode collaborateur partiel donnant des droits d'accès et en en modification de certains éléments prédéfinis du contenu sur une durée limitée,
- etc.

Les types d'accès en réunion de groupe sont associé à une session de communication synchrone multiutilisateur alors que les types d'accès en réunion de lien et les autres types d'accès sont associés à une session de communication synchrone entre l'utilisateur source et l'utilisateur destinataire du lien utilisé pour accéder au contenu C. Seuls les types d'accès en réunion autorise l'association de plusieurs liens à un contenu ou plusieurs liens dans un même espace de partage.

Ainsi, lorsqu'un utilisateur source met à disposition un contenu dans un espace de partage, il distribue une télécommande sur le contenu à l'utilisateur destinataire, voire aux utilisateurs destinataires dans le cas d'accès en réunion de groupe. Ainsi l'utilisateur source a et garde la maîtrise du contenu au sens large (contenus multimédia, applications, et.) mis à disposition dans l'espace de partage à tout moment de la création de l'espace de partage à sa résiliation, et dans toute sa latitude à savoir qu'il peut purement et simplement supprimer l'accès à l'espace de partage pour un utilisateur destinataire ou de manière moins binaire modifier ses droits d'accès pour basculer par exemple d'un accès en lecture/écriture en un accès en lecture seule.

Il pourra être envisagé dans la gestion de l'espace de partage de contenu que l'utilisateur source puisse, à un moment donné où au moins deux utilisateurs destinataires d'un même espace de partage consulte un même contenu (notamment l'utilisateur source est en communication synchrone avec au moins un utilisateur destinataire et reçoit une notification de présence d'un autre utilisateur destinataire du même espace de partage à propos du même contenu), permettre une communication synchrone multiutilisateur entre l'utilisateur source et ces utilisateurs destinataires, notamment en sélectionnant le basculement en mode réunion de groupe avec ces utilisateurs destinataires sur une plage temporelle débutant à l'instant présent et se terminant à un instant à préciser par l'utilisateur source. Ainsi, après acception d'un ou plusieurs des utilisateurs destinataires de ce basculement, l'espace de partage devient un espace de partage de type d'accès réunion de groupe pour la durée prévue avant de revenir dans le type d'accès précédemment prévu.

L'utilisateur source étant assimilé à l'administrateur de l'espace de partage 1, il a tout les droits d'accès au contenu y compris celui de le supprimer de l'espace de partage 1 indépendamment du fait que le contenu soit accédé ou non et du lien utilisé par l'utilisateur destinataire pour l'accès au contenu. De plus, il a tout les droits sur l'espace de partage 1 notamment celui de modifier voire supprimer des types d'accès et/ou des liens, en particulier à tout moment y compris lors de l'utilisation d'un contenu par un utilisateur d'un lien qu'il souhaite modifier.

Dans un mode de réalisation particulier, un lien L comporte une indication du type d'accès associé au lien pour l'accès audit contenu M_C dudit espace de partage 1.

Dans un mode de réalisation particulier, l'espace de partage 1 comporte une mémoire 14 comportant au moins une plage temporelle ΔT d'utilisation dudit espace de partage 1.

Dans un mode de réalisation particulier, ladite mémoire 14 est une base de données de plages temporelles ΔT d'utilisation associées respectivement à un ou plusieurs des liens étant autorisé à accéder au contenu M_C dudit espace de partage 1.

Les types d'accès en réunion sont associés à une plage temporelle définissant une durée de partage limitée dans le temps.

Il peut ainsi être envisagé que l'espace de partage 1 comporte une ou plusieurs mémoire(s) et/ou base de donnée(s) par exemple :
- une seule base de données constituant à la fois les bases de données 11 de contenu, 12 de liens, 13 de type d'accès, et 14 de plages temporelles
- ou une mémoire ou base de données pour chacun des éléments,
- ou une base de données de contenu 11 et une base de données regroupant plusieurs de ces bases de données telles que, par exemple les bases de données 12 de liens, 13 de types d'accès, et 14 de plages temporelles,
- etc.

Dans un mode de réalisation particulier, l'espace de partage 1 comporte des moyens de communications 15 apte à permettre l'accès au contenu M_C dudit espace de partage 1. En outre, les moyens de communications sont, notamment, apte à permettre l'établissement d'une session de communication synchrone entre l'utilisateur source U1 et l'utilisateur destinataire U2 d'un lien L dudit espace de partage 1. Par exemple, lors d'une demande d'accès à un contenu M_C dudit espace de partage par un utilisateur destinataire U2 d'un lien L dudit espace de partage 1, les moyens de communication 15 ouvrent une session entre un dispositif de communication de l'utilisateur source U1 et un dispositif de communication de l'utilisateur destinataire U2 passant par l'espace de partage 1 permettant l'accès par l'utilisateur U2 audit contenu M_C dudit espace de partage 1 et une communication synchrone entre l'utilisateur source U1 et l'utilisateur destinataire U2 à l'initiative de l'un quelconque de ces deux utilisateurs : l'utilisateur source U1 et l'utilisateur destinataire U2.

Il peut aussi être envisagé de restreindre l'initiative de la communication synchrone à l'utilisateur source U1. Cette restriction pourrait être automatique lorsque le(s) lien(s) dudit espace de partage ne sont pas associés à un type d'accès en réunion de groupe.

Dans un mode de réalisation particulier, le lien est un lien de télécommunication certifié comportant une génération d'un couple d'identifiants certifiés des premier et second utilisateurs apte à permettre l'établissement d'une session de communication entre au moins un dispositif de communication du premier ensemble et un dispositif de communication du second ensemble.

Ainsi, l'authentification forte, telle que celle apportée par carte SIM, associé aux fonctionnalités de l'espace de partage 1, permet de garantir la responsabilité et la confiance réciproque sont pour l'utilisation des fonctionnalités de cet espace de partage 1.

La figure 2 illustre un schéma détaillé mais non exhaustif d'un mode de réalisation d'un procédé de création d'un espace de partage autour d'au moins un contenu selon l'invention.

Le procédé de création d'un espace de partage 1 autour d'au moins un contenu M_C, comporte une association CREA_EP_2 d'au moins un lien L entre ledit utilisateur source U1 et au moins un utilisateur destinataire U2 d'un réseau de télécommunication pour un type d'accès A audit contenu M_C, ladite association étant apte à permettre un déclenchement par l'accès d'un utilisateur destinataire U2 à un contenu M_C dudit espace de partage 1 d'une autorisation d'un établissement de communication synchrone entre ledit utilisateur source U1 et ledit utilisateur destinataire U2 d'un réseau de télécommunication dans une utilisation dudit espace de partage.

Dans un mode de réalisation particulier, l'association CREA_EP_2 comporte aussi l'association d'une plage temporelle ΔT durant laquelle l'utilisation dudit contenu C par ledit lien L est autorisée. Lorsqu'un lien est associé à l'espace de partage sans plage temporelle ou avec une plage temporelle pour laquelle l'instant de fin n'est pas défini, il est appelé lien ou invitation illimitée dans le temps.

Dans un mode de réalisation particulier, le procédé de création d'un espace de partage comporte aussi une étape préalable CREA_EP_0 fournissant le lien L et le contenu M_C.

Dans un mode de réalisation particulier, l'étape préalable comporte une indication du lien L à associer. En particulier, cette indication du lien peut être une création CREA_L d'un lien L entre un utilisateur source U1 créant le lien et un utilisateur destinataire U2. Le lien L ainsi créé peut être mémorisé dans une base de données de lien 32. La base de données de lien 32 est soit une base de données associée à l'utilisateur U1 de l'ensemble des liens d'U1 dans les réseaux de télécommunications, soit une base de données associée à l'utilisateur U1 de l'ensemble des liens de l'utilisateur source U1 pour la création et la gestion d'espace de partages de partage selon l'invention, soit la base de données de liens 12 de l'espace de partage 1 en cours de création.

Dans un mode de réalisation particulier, la création d'un lien CREA_L est apte à générer un lien certifié à savoir un lien de télécommunication L entre un premier ensemble de dispositifs de communication associés à l'utilisateur source U1 et un second ensemble de dispositifs de communication associés à l'utilisateur destinataire U2, cette génération du lien certifié comportant une génération d'un couple d'identifiants certifiés de l'utilisateur source U1 et de l'utilisateur destinataire U2 apte à permettre l'établissement de la session de communication synchrone entre au moins un dispositif de communication du premier ensemble et un dispositif de communication du second ensemble.

En particulier, cette indication du lien L peut être une sélection SEL_L d'un lien L parmi des liens existants, notamment dans une base de données de lien 32.

Dans un mode de réalisation particulier, l'étape préalable comporte une indication du contenu M_C à associer. En particulier, cette indication du contenu peut être une création CREA_C d'un contenu M_C par un utilisateur source U1. Le contenu C ainsi créé peut être mémorisé dans une base de données de contenus 21. La base de données de contenus 21 est composée d'une ou plusieurs des bases de données suivantes : une base de données de contenus associée à l'utilisateur U1 dans un dispositif de communication 2 de l'utilisateur source U1 ou dans les réseaux de télécommunications, une base de données associée à l'utilisateur U1 de l'ensemble des contenus de l'utilisateur source U1 pour la création et la gestion d'espace de partages de partage selon l'invention, soit la base de données de contenus 11 de l'espace de partage 1 en cours de création.

En particulier, cette indication du contenu M_C peut être une sélection SEL_M_C d'un contenu M_C parmi des contenus existants, notamment dans une base de données de contenus 21. Dans ce cas, la base de données 21 peut aussi être une base de données d'un fournisseur de contenus auprès de laquelle l'utilisateur source U1 dispose d'un abonnement (l'abonnement est notamment un abonnement spécifique pour le partage de contenus en de respecter les droits en terme de propriété intellectuelle lié à ces contenus spécifiques dans certains pays à une utilisation privé ou non en fonction du nombre de personne invitée à partager).

Dans un mode de réalisation particulier, le procédé de création d'espace de partage démarre par la réception d'une commande de partage sh provenant de l'utilisateur source U1 qui déclenche l'étape préalable CREA_EP_0.

Dans un mode de réalisation particulier, le type de commande de partage sh est identifié **M_C/L ?:** commande de partage de contenu M_C et/ou commande de partage avec un lien L . En fonction du type de commande de partage, le procédé de création d'espace de partage comporte ensuite l'indication respectivement du contenu M_C et/ou du lien L. Pour cela, l'étape préalable CREA_EP_0 comporte notamment une identification du mode d'indication : sélection ou création **SEL/CREA ?.**
Dans un mode de réalisation particulier, l'étape préalable CREA_EP_0 comporte une vérification **M_C&L ?** des éléments à transmettre à l'étape de d'association CREA_EP_2. Ainsi, si à l'issue de la vérification, **M_C&L ?** l'étape d'association CREA_EP_2 ne dispose pas des éléments nécessaires à celles-ci notamment respectivement pas de lien ØL ou pas de contenu ØM_C, l'étape préalable CRA_EP_0 comporte respectivement une indication de lien L ou une indication de contenu M_C.

Dans un mode de réalisation particulier, le type d'accès A peut être sélectionné ou créé dans cette étape préalable CREA_EP_0, notamment le type d'accès en réunion de groupe L+.

Dans un mode de réalisation particulier, le type d'accès en réunion de groupe L+ est sélectionné dans l'indication du lien. En cas de sélection de ce type d'accès, et tant que l'ensemble des invités prévus n'ont pas été indiqué **L+ ?,** l'utilisateur source U1 repasse par l'étape d'indication de lien.

Dans un mode de réalisation particulier, l'indication de lien se fait en sélectionnant les utilisateurs destinataires dans un carnet d'adresse. Notamment, dans le cas de réunion de groupe répétée avec les mêmes utilisateurs destinataires sur des espaces de partages différents, l'utilisateur source peut générer un alias de groupe dans son carnet d'adresse utilisé pour sélectionner l'ensemble des utilisateurs destinataires à une réunion de groupe.

Dans un mode de réalisation non illustré, les autres types d'accès A et/ou la plage temporelle ΔT est indiqué durant l'étape préalable CREA_EP_0, notamment lors de l'indication de lien. En particulier, dans le cas d'un accès de type réunion de groupe à un espace de partage, il pourra ainsi être envisagé que certains liens démarrent la réunion de groupe avant les autres liens invités à la réunion de groupe (notamment lors d'une réunion de groupe de présentation pour la finalisation de sa préparation) ou la finissent après les autres (par exemple pour faire un premier bilan).

Dans un mode de réalisation particulier, le procédé de création d'espace de partage comporte l'information CREA_EP_1 des utilisateurs destinataires U2 du fait qu'ils sont invités à partager un contenu M_C au sein de cet espace de partage. Cette information peut être une notification selon un ou plusieurs des modes d'information suivants : email, messagerie instantanée, SMS, etc. et/ou ajout des contenus dont ils sont les invités dans une interface de gestion de contenus auxquels ils ont accès.

Les messages de notification de mise à disposition de contenus comportent l'accès à l'espace de partage constitué pour l'utilisateur destinataire.

Dans un mode de réalisation particulier, l'association CREA_EP_2 du lien L entre un utilisateur source U1 et un utilisateur destinataire U2 pour un type d'accès A au contenu M_C (et, éventuellement, de plage temporelle) n'est effectuée que lorsque l'utilisateur destinataire U2 a répondu positivement à l'invitation faite par l'information CREA_EP_1.

Dans un mode de réalisation particulier, si l'utilisateur destinataire U2 refuse l'invitation à partager le contenu M_C de l'espace de partage, l'association CREA_EP_2 n'est pas effectuée et l'espace de partage n'est pas créé.

Ce procédé de création d'espace de partage peut être implémenté sous la forme d'un programme comprenant des instructions de code de programme pour l'exécution des étapes du procédé de création d'espace de partage autour d'au moins un contenu lorsque ledit programme est exécuté par un processeur.

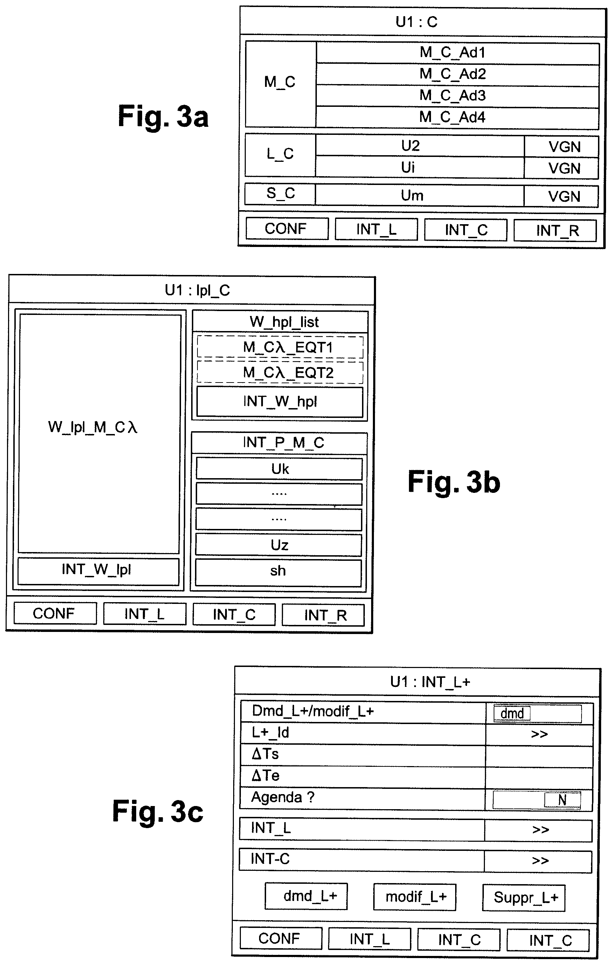

Les figures 3a, 3b et 3c illustrent des exemples d'interfaces avec les espaces de partage selon l'invention.

En particulier, la figure 3a propose une interface d'accès à l'ensemble des contenus disponibles pour un utilisateur. Cette interface permet à un utilisateur U1 de visualiser l'ensemble des adresses correspondant à des contenus C auxquels il a accès.

Ainsi, l'utilisateur U1 a accès à différents types de contenus :
- ses contenus personnels M_C qui sont à différentes adresses M_C_Ad1, M_C_Ad2, M_C_Ad3 et M_C_Ad4, qui correspondent par exemple à des bibliothèques personnelles sur certains de ses dispositifs de communications telles qu'une bibliothèque musicale (tunes, etc.), une bibliothèque de documents divers sur un baladeur numérique (baladeur MP3, Ipoh, etc.), sur un ordinateur personnel (Home library), ou sur un espace de partage réseau personnel (Mes données d'Orange par exemple), etc.,
- des contenus partagés L_C sur lesquels il est invité c'est-à-dire des contenus d'un espace de partage pour lesquels il est utilisateur destinataire,
- des contenus partagés par un invité d'une réunion de groupe sur un espace de partage S_C,

L'interface est prévue pour identifier l'utilisateur source (respectivement U2, Ui, Um) des contenus partagés.

Dans un mode de réalisation particulier de l'interface, la sélection d'une adresse de contenus personnels M_C_Ad1 permet la navigation dans l'arborescence, jusqu'à l'arrivée dans le contenu.

A partir de la vignette VGN d'un contenu personnel M_C ou partagé L_C, S_C, l'utilisateur U1 peut lancer la reproduction locale du contenu comportant notamment l'affichage d'un écran permettant le contrôle de cette reproduction et, dans le cas de contenu visuel, vidéo ou textuel, l'affichage du contenu. Dans le cas de contenus partagés dont il est l'invité, le contrôle disponible est fonction du type d'accès accordé par l'utilisateur source.

La figure 3b montre un exemple d'une interface de gestion lpl_C du partage d'un contenu par un utilisateur source U1. Cette interface permet la mise en œuvre d'un procédé de gestion de partage de contenus comportant au moins une création d'au moins un espace de partage en associant au moins un contenu pour au moins un type d'accès à au moins un lien entre un utilisateur source associé audit espace de partage et au moins un utilisateur destinataire, ledit au moins un lien étant apte à permettre un déclenchement par l'accès d'un utilisateur destinataire à un contenu dudit espace de partage d'une autorisation d'un établissement de communication synchrone entre ledit utilisateur source et un utilisateur destinataire d'un réseau de télécommunication dans une utilisation dudit espace de partage.

La gestion de partage de contenu comporte en outre la modification d'un espace de partage en modifiant au moins un des paramètres suivants de l'espace de partage :
- lien
- contenu
- type d'accès
- une plage temporelle d'utilisation
La modification peut consister dans le remplacement du paramètre par une nouvelle donnée (nouveau lien, nouveau contenu, nouveau type d'accès, nouvelle plage temporelle) ou l'ajout d'un paramètre sachant que l'ajout d'un paramètre de lien modifie automatiquement le type d'accès en type d'accès en réunion de groupe correspondant et demande si elle n'est pas indiquée la saisie du plage temporelle (par l'utilisateur source, par synchronisation avec l'agenda, etc.), et l'ajout d'une plage temporelle modifie le type d'accès en type d'accès réunion de lien. Ainsi, à un espace de partage peuvent être associées plusieurs plages temporelles, permettant à plusieurs utilisateurs (dont l'utilisateur source) de se réunir à plusieurs reprises autour d'un même contenu par exemple pour des séances de travail, pour une activité de loisirs telles que, par exemple plusieurs parties d'un même jeu vidéo.

Cette interface permet de lancer, dans la fenêtre de reproduction de contenu W_lpl_M_C, la reproduction locale d'un contenu M_C sélectionné (dans le cas de contenu visuel, vidéo ou textuel, l'affichage du contenu) et l'affichage d'un écran INT_W_lpl permettant le contrôle de cette reproduction.

Cette interface permet de sélectionner un lien en sélectionnant un utilisateur destinataire parmi des utilisateurs destinataires potentiels Uk...Uz qui n'ont pas encore accédé au contenu M_Cλ dans une fenêtre de partage INT_P_M_C et de les inviter à partager sh ce contenu M_Cλ. Les utilisateurs destinataires potentiels sont notamment des contacts d'un ou plusieurs carnets d'adresse de l'utilisateur source.

Dans un mode de réalisation particulier, l'interface présente une fenêtre d'outils du réseau local W_hpl_list permettant de visualiser les équipements M_Cλ_EQT1, M_Cλ_EQT2 disponibles dans le réseau local et compatibles avec le contenu M_Cλ reproduit et grâce à l'interface de cette fenêtre INT_W_hpl d'en sélectionner un pour lancer la diffusion (notamment en streaming) de ce contenu.

La figure 3c illustre un exemple d'interface de création et gestion de partage de contenus au sein d'une réunion de groupe programmée INT_L+ par un utilisateur source U1. L'interface permet à la fois la création *dmd_L*+ et la gestion *modif_L*+, *suppr_L+* de type d'accès en réunion de groupe à au moins un contenu. Elle permet d'accéder à l'interface de partage de contenus INT_C pour sélectionner un ou plusieurs contenus et à une interface de lien INT_L pour sélectionner et/ou créer des liens avec des utilisateurs destinataires.

L'interface de partage de contenus INT_C est par exemple composée de celles des figures 3a et 3b. L'interface de partage de contenus INT_C permet d'afficher les contenus personnels M_C de l'utilisateur source U1 et leur statut pour cette réunion de groupe : non partagé, partagé en cours de préparation, partagé, etc., et de modifier le statut d'un contenu en supprimant le partage, en l'ajoutant au partage, etc.

L'interface de lien INT_L comporte notamment l'affichage d'une liste d'utilisateurs destinataires potentiels de l'utilisateur source U1, par exemple une liste de contacts d'un carnet d'adresse, avec leur statut par rapport à la réunion de groupe : invité, invitation envoyée, non invité, etc. et des moyens de modification de ce statut pour les utilisateurs destinataires. Cette modification de statut ayant pour effet de créer un lien s'il n'existe déjà et d'envoyer une invitation à partager la réunion de groupe à l'utilisateur destinataire au moment de la création dmd_L+ ou de la modification modif_L+ de la réunion de groupe.

Dans un mode de réalisation particulier, les données concernant les liens et la plage temporelle de cet espace de partage avec un type d'accès réunion de groupe peuvent être synchronisés avec un agenda d'un calendrier ou d'un système de communication de type messagerie ou téléphonique de l'agenda vers l'espace de partage ou inversement.

De manière plus générale, cette synchronisation est aussi possible pour la gestion de lien à durée limitée dans le temps dont le type d'accès n'est pas réunion.

Cette interface comporte trois zones de sélection dmd_L+,modif_L+ et suppr_L+ correspondant à la validation de , respectivement, la création d'une réunion de groupe, la modification d'une réunion de groupe en utilisant les données sélectionnées ou la suppression d'une réunion de groupe correspondant aux données sélectionnées.

Dans un mode de réalisation particulier, l'interface INT_L+ vérifie sur une première ligne si la réunion de groupe est déjà crée dmdL+/modif_L+. Si non, l'utilisateur source U1 sélectionne *dmd* sur cette ligne, et se voit proposer de saisir un identifiant pour cette réunion de groupe sur la ligne L+ld qui est par exemple un nom de soirée, un nom de groupe, en outre, il se voit proposer de saisir la plage temporelle en indiquant l'instant de début de réunion de groupe ΔTs et l'instant de fin de réunion de groupe ΔTe. Des trois zones de sélection, seule la zone de sélection dmd_L+ de l'interface est active.

Si oui, la liste des réunions de groupes est affichée, par exemple dans une nouvelle fenêtre, notamment sous la forme d'un menu déroulant. Cette liste des réunion de groupes permet la sélection de l'une d'elles par l'utilisateur source U1 et l'affichage automatique dans l'interface de réunion de groupe INT_L+ des données déjà enregistrées (identifiant de la réunion de groupe et/ou plage temporelle et/ou un ou plusieurs contenus et/ou un ou plusieurs liens, etc.) en permettant la modification de ces données et la saisie ou la sélection de nouvelles données. Des trois zones de sélection, les zones de sélection modif_L+ et suppr_L+ de l'interface sont actives.

Un mode d'implémentation du procédé de gestion de partage de contenus est un programme comprenant des instructions de code de programme pour l'exécution des étapes du procédé de gestion de partage de contenus lorsque ledit programme est exécuté par un processeur.

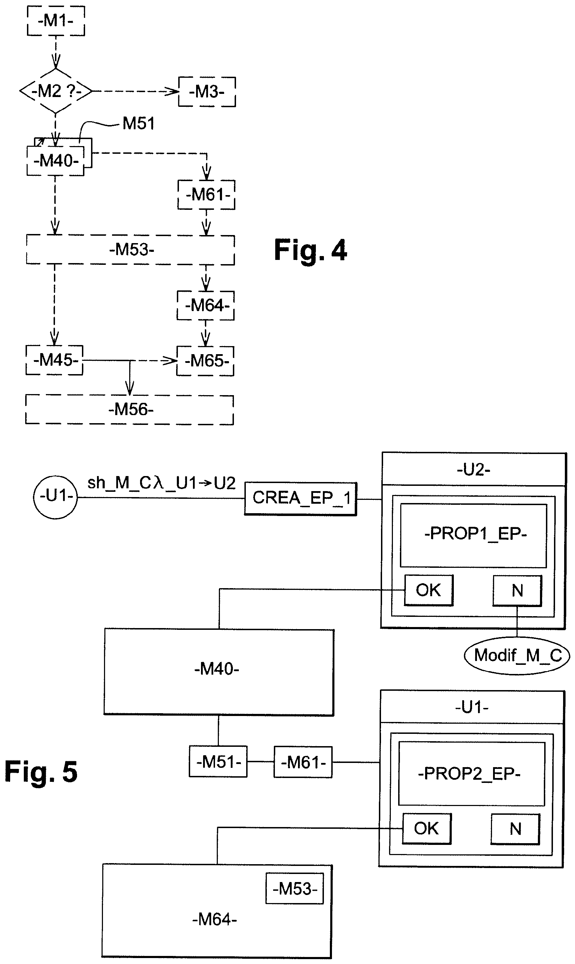

La figure 4 illustre un schéma détaillé mais non exhaustif d'un mode de réalisation d'un procédé d'utilisation d'un espace de partage autour d'au moins un contenu selon l'invention. Le procédé d'utilisation d'espace de partage comporte un déclenchement M51 par l'accès M40 d'un utilisateur destinataire à un contenu C dudit espace de partage 1 d'une autorisation d'un établissement de communication synchrone entre ledit utilisateur source U1 et un utilisateur destinataire U2 d'un réseau de télécommunication dans l'utilisation dudit espace de partage, ledit accès ayant été autorisé par un lien entre ledit utilisateur source et ledit utilisateur destinataire associé audit contenu pour ce type d'accès.

Dans un mode de réalisation particulier, un utilisateur destinataire U2 demande M1 l'accès à un contenu C d'un espace de partage 1 d'un utilisateur source 1, par exemple en utilisant une interface d'accès à l'ensemble des contenus disponible pour cet utilisateur destinataire U2 telle que notamment celle illustrée par la figure 3a, ou encore en utilisant un lien hypertexte d'une notification de partage reçue lors de la création de cet espace de partage 1.

Dans un mode de réalisation particulier, une vérification est faite des droits d'accès dudit utilisateur U2 demandant l'accès au contenu C, notamment du type de droits d'accès, de la durée d'utilisation, etc. Ainsi, l'accès M40 ne sera mis en œuvre que si l'utilisateur destinataire U2 à les droits d'accès au moment de la demande d'accès. Il peut être envisagé, si l'utilisateur U2 n'a pas les droits d'accès de l'en informer M3 en précisant éventuellement, la plage temporelle d'utilisation qui lui est allouée le cas échéant.

Dans un mode de réalisation particulier, le procédé d'utilisation comporte la détection (illustrée par la flèche en gras entre l'accès au contenu M40 par l'utilisateur destinataire U2 et le déclenchement M51 de l'autorisation d'établissement de communication synchrone) automatique de présence d'un utilisateur destinataire U2 sur un contenu C dudit espace de partage 1, la notification de cette présence au propriétaire du contenu, et la possibilité pour ce détenteur de rentrer en communication avec le « visiteur » tout en visualisant le contenu ou l'application dont l'usage reste sous le contrôle du visiteur. La visualisation n'étant possible que si la communication a été établie au préalable.

Dans un mode de réalisation particulier, le procédé d'utilisation d'espace de partage comporte une notification M61 dudit utilisateur source U1 lorsque ledit utilisateur destinataire U2 accède M40 à un contenu C dudit espace de partage 1, ladite notification M61 étant apte à permettre l'établissement de ladite communication synchrone entre ledit utilisateur source U1 et ledit utilisateur destinataire U2.

Cette notification peut être réalisée par envoi d'un message à l'utilisateur source notamment d'un ou plusieurs des type suivants : SMS, email, messagerie instantanée ou d'un nouveau mode de signalisation... le type de message peut être fonction de la localisation, d'un statut de présence, etc. de l'utilisateur source, ou encore par modification du statut du contenu dans l'espace de gestion (passage de contenu « partagé » à contenu « visité » par exemple) permettant à l'utilisateur source consultant cet espace d'être informé de la visite.

Dans un mode de réalisation particulier, la notification de présence de l'utilisateur destinataire sur cet espace de partage inclut un élément (notamment de type lien hypertexte) de mise en œuvre du lien pour établir la communication synchrone avec l'utilisateur destinataire.

Dans un mode de réalisation particulier, le procédé d'utilisation d'espace de partage comporte un établissement M53 d'une communication synchrone entre ledit utilisateur source U1 et un utilisateur destinataire U2 d'un réseau de télécommunication lorsque ledit utilisateur destinataire U2 accède M40 à un contenu dudit espace de partage 1, ledit accès ayant été autorisé par un lien entre ledit utilisateur source et ledit utilisateur destinataire associé audit contenu pour ce type d'accès.

Dans un mode de réalisation particulier, le procédé d'utilisation d'espace de partage comporte un accès M64 par ledit utilisateur source U1 audit contenu C accédé M40 par l'utilisateur destinataire U2. Ainsi, l'utilisateur source et l'utilisateur destinataire disposent ensemble du même contenu, notamment utilisent ensemble la même application, autour duquel ils conversent. Par même contenu est entendu le contenu dans le même contexte ou état, c'est-à-dire que si le contenu est une vidéo, l'utilisateur source et l'utilisateur destinataire verront simultanément la même image de cette vidéo, si le contenu est un questionnaire, l'utilisateur source et l'utilisateur destinataire verront ensemble le questionnaire au même stade de remplissage, etc.

Dans un mode de réalisation particulier non illustré, dans le cas d'un type d'accès réunion de groupe, la session de communication M53 est une session de communication multiutilisateurs mettant en relation l'utilisateur source U1 et l'ensemble des utilisateurs destinataires U2 accédant au contenu C associé à un type d'accès spécifique.

Ainsi, l'espace de partage 1 permet, éventuellement, la rencontre simultanée de plusieurs utilisateurs destinataire U2 dans un espace de partage 1 configuré par l'utilisateur source U1 , détenteur de l'espace de partage 1, avec usage du contenu C de l'espace de partage 1 sous contrôle de l'utilisateur source U1 et communication établie entre tous.

Dans un mode de réalisation particulier non illustré, le procédé d'utilisation d'espace de partage 1 comporte la modification du type d'accès à un ou plusieurs contenus C et des liens L associés à un contenu lorsque l'utilisateur source accède à un contenu d'un espace de partage autour d'au moins un contenu d'un autre utilisateur source selon un type d'accès en réunion de groupe l'autorisant.

En particulier, le procédé d'utilisation d'espace de partage comporte une notification dudit utilisateur source lorsque ledit utilisateur destinataire accède à un contenu dudit espace de partage, ladite notification étant apte à permettre de déclencher l'établissement de ladite communication synchrone entre ledit utilisateur source et ledit utilisateur destinataire. Notamment, la notification comporte des moyens de déclenchement d'une mise en relation tel qu'un clic to call ou clic to email, clic to im, etc. Ainsi, lorsque l'utilisateur destinataire accède à l'album photo mis à sa disposition par l'utilisateur source dans son espace de partage, l'utilisateur source est non seulement notifié de la présence de l'utilisateur destinataire dans son espace de partage mais se voit offrir l'opportunité d'échanger avec l'utilisateur destinataire lors de sa consultation de l'album photo comme il le ferait à la maison lorsque son invité feuilleté son album photo.

En particulier, ladite notification est apte à permettre de déclencher un accès simultané (M64) par ledit utilisateur source audit contenu accédé par l'utilisateur destinataire. Ainsi, non seulement, l'utilisateur source et l'utilisateur destinataire peuvent échanger autour du contenu partagé, par exemple l'album photo, mais peuvent aussi le consulter ensemble, par exemple feuilleter en ensemble l'album photo, l'utilisateur source arrivera sur l'album photo à la photo que l'utilisateur destinataire est en train de visionner et gardera le même contexte que l'utilisateur dentinaire c'est-à-dire que si l'utilisateur destinataire passe à la photo suivante, l'utilisateur source verra lui aussi la photo suivante simultanément, si l'utilisateur destinataire ajoute une photo (par exemple suite à des vacances ensemble), l'utilisateur source verra simultanément les manipulations de l'application par l'utilisateur destinataire pour ajouter la photo et la nouvelle photo. Pour ce faire, la notification comporte notamment des moyens de déclenchement d'une demande d'accès au contenu accédé tel qu'un clic to access.

En particulier, le procédé d'utilisation d'espace de partage comporte un transfert (non illustré) de l'utilisateur source utilisateur vers un utilisateur délégué, ledit transfert permettant de transférer du premier utilisateur à l'utilisateur délégué l'autorisation d'un établissement de communication synchrone dans l'utilisation dudit espace de partage, Le transfert peut se matérialisé notamment par un transfert automatique de toutes les notifications provenant d'un espace de partage, i.e. d'une application associée à un lien spécifique vers l'utilisateur délégué (aussi appelé troisième utilisateur). Ainsi, une infirmière peut mettre à disposition de ces patients dans le cadre d'un service d'aide médical une application de mesure de données médicales et transférer certains patients à un stagiaire. Le stagiaire pourra alors se mettre en relation avec le patient lorsque celui-ci viendra utiliser l'application de mesure pour éventuellement l'aider.

Dans un mode de réalisation particulier, la session de communication synchrone est close M56 :
- soit par fin M45 de l'accès audit espace de partage 1 par l'utilisateur destinataire U2 provoquant en outre éventuellement une fin M65 de l'accès audit espace de partage 1 par l'utilisateur source U1 (cas illustré par la figure 4) ;
- soit par clôture de la session de communication par l'un ou l'autre des utilisateurs source U1 ou destinataire U2 ;
- soit par prise de contrôle de l'utilisateur source U1 sur le contenu et commande par cet utilisateur source U1 de la fin M45 de l'accès audit espace par l'utilisateur destinataire U.

Dans un mode d'implémentation particulier, un programme comprend des instructions de code de programme pour l'exécution des étapes du procédé d'utilisation d'un espace de partage autour d'au moins un contenu lorsque ledit programme est exécuté par un processeur.

Dans une variante de mise en œuvre de l'utilisation d'un espace de partage 1 en réunion de groupe, l'utilisateur source propose comme contenu à partager de visionner une vidéo sélectionnée soit parmi ses propres contenus soit louer auprès d'un kiosque d'un fournisseur de contenu adapté au partage. Cette variante permet à l'utilisateur source de reproduire la soirée DVD avec des amis distants en pouvant converser autour du visionnage de cette vidéo.

Dans une variante de mise en œuvre de l'utilisation d'un espace de partage 1 en réunion de groupe, l'utilisateur source propose comme contenu à partager une partie d'un jeu vidéo sélectionnée soit parmi ses propres contenus soit louer auprès d'un kiosque d'un fournisseur de contenu adapté au partage.

Dans une variante de mise en œuvre de l'utilisation d'un espace de partage 1 en réunion de groupe, l'utilisateur source propose comme contenu des documents de travail. Cette variant permet à l'utilisateur source d'effectuer une séance de travail avec des collaborateurs distants, séances de travail qui peut être créative.

D'autres variantes de mise en œuvre de l'utilisation d'un espace de partage 1 en réunion de groupe : un utilisateur source d'une entreprise :
- réunit inopinément des utilisateurs destinataires, clients de l'entreprise, présents sur un même contenu,
- conseiller de l'entreprise, contacte un utilisateur destinataire, citent de l'entreprise, quand il est en train de regarder un contenu,
- planifie et gère une conférence autour d'un espace de partage, et par conséquent d'au moins un contenu, pour utilisateurs destinataires, clients de l'entreprise.

La figure 5 illustre un schéma simplifié de création et utilisation d'un espace de partage autour d'au moins un contenu selon l'invention. Un utilisateur source U1 souhaite partager un contenu M_Cλ avec un utilisateur destinataire U2, il l'exprime par une demande de partage sh_M_Cλ_U1→U2 à un dispositif du réseau de télécommunication qui mémorise la demande et la transmet CREA_EP_1 à l'utilisateur destinataire U2

Cette demande est affichée sous la forme d'une proposition PROP1_EP à l'utilisateur U2 d'accès immédiat au contenu partagé. Ainsi, dans le mode de réalisation de la figure 4, un espace de partage est créé en associant un lien L entre l'utilisateur source U1 et l'utilisateur destinataire U2 pour le type d'accès demandé (il peut être envisagé que ce type d'accès soit par défaut en lecture s'il n'est pas précisé par l'utilisateur source U1) à ce contenu soit avant la transmission de la demande de partage à l'utilisateur source U2, soit immédiatement après. Dans le cas de la figure 4, la création de l'espace de partage ne nécessite pas l'accord de l'utilisateur destinataire sur le partage.

Si l'utilisateur destinataire U2 n'accède pas immédiatement N le contenu C partagé, ce contenu est ajouté dans une interface de contenu en tant que contenu partagé L_C, notamment l'interface illustrée par la figure 3a.

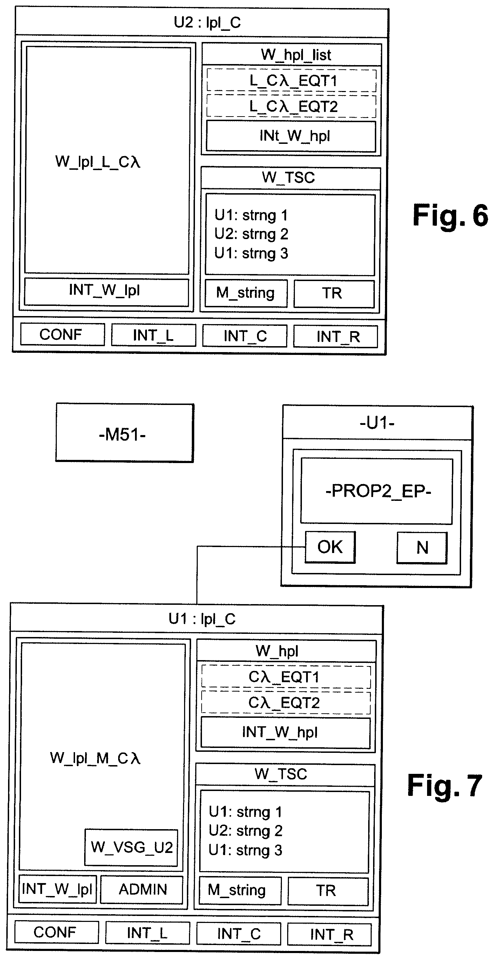

Si l'utilisateur destinataire U2 décide d'accéder immédiatement OK au contenu C, il entre dans l'étape d'accès M40 au contenu C de l'espace de partage 1 qui notamment affiche une interface de reproduction locale de contenu (illustrée à titre d'exemple par la figure 6).

Cet accès M40 déclenche M51 l'autorisation d'établissement de communication synchrone par mémorisation de la présence de l'utilisateur destinataire U2 sur le contenu C de l'espace de partage 1 en déclenchant la transmission d'une notification M61 de cette présence à l'utilisateur source U1.

Cette notification se présente sous la forme d'une proposition PROP2_EP à l'utilisateur source U1 qui lui permet OK, dans le cas illustré par la figure 4, simultanément d'établir une communication synchrone M53 avec l'utilisateur destinataire et d'accéder M64 au même contenu C a travers de l'espace de partage 1.

La figure 6 illustre une interface d'utilisation par un utilisateur destinataire U2 d'un espace de partage 1 autour d'au moins un contenu L_Cλ selon l'invention. Cette interface permet de lancer, dans la fenêtre de reproduction de contenu W_lpl_L_Cλ, la reproduction locale du contenu partagé L_Cλ sélectionné (dans le cas de contenu visuel, vidéo ou textuel, l'affichage du contenu) et l'affichage d'un écran INT_W_lpl permettant un contrôle de cette reproduction fonction du type d'accès accordé par l'utilisateur source.

Dans un mode de réalisation particulier, cette interface affiche une fenêtre d'outils du réseau local W_hpl_list permettant de visualiser les équipements M_Cλ_EQT1, M_Cλ_EQT2 disponibles dans le réseau local et compatibles avec le contenu M_Cλ reproduit et grâce à l'interface de cette fenêtre INT_W_hpl d'en sélectionner un pour lancer la diffusion (notamment en streaming) de ce contenu.

Dans un mode de réalisation particulier, cette interface dispose d'une fenêtre de reproduction pour une communication synchrone textuelle W_TSC notamment de type chat ou messagerie instantanée permettant à U1 et U2 d'échanger par écrit des phrases strng1, strng2, strng 3. Pour saisir une nouvelle phrase l'utilisateur destinataire sélection M_string et, une fois le texte saisi, il demande sa transmission TR.

La figure 7 illustre un schéma simplifié d'utilisation et une interface d'utilisation par un utilisateur source d'un espace de partage autour d'au moins un contenu selon l'invention.

M51 : Un dispositif du réseau de télécommunication reçoit une information de détection de la présence de l'utilisateur destinataire U2 sur le contenu C de l'espace de partage 1, il mémorise cette présence et l'archive dans un historique lié à l'espace de partage 1, notamment au contenu C de cet espace de partage 1. Cet événement déclenche l'autorisation d'établissement de communication synchrone entre l'utilisateur source U1 et l'utilisateur destinataire U2.

L'utilisateur source U1 reçoit une proposition PROP2_EP1 de rejoindre l'utilisateur destinataire U2 dans sa consultation du contenu de l'espace de partage 1. S'il accepte cette proposition, il accède au contenu C sur une interface d'utilisation similaire à celle de l'utilisateur destinataire U2 (notamment illustrée par la figure 6) qui propose en outre au moins un mode de communication synchrone avec l'utilisateur destinataire U2 : en l'occurrence une communication synchrone textuelle W-TSC et une communication synchrone Visio W_SC_U2.

L'interface d'utilisation lpl_C par un utilisateur source U1 d'un espace de partage 1 autour d'au moins un contenu M_Cλ accédé par l'utilisateur destinataire U2 permet de lancer, dans la fenêtre de reproduction de contenu W_lpl_M_Cλ, la reproduction locale du contenu partagé M_Cλ en accédé par l'utilisateur destinataire U2 (soit automatiquement soit à la demande de l'utilisateur source U1), l'affichage d'un écran INT_W_lpl permettant un contrôle de cette reproduction et une zone de prise de contrôle ADMIN permettant à l'utilisateur source de reprendre la main sur le contenu partagé à tout moment. Ainsi l'interface avec le contenu est partagée par l'utilisateur source avec l'utilisateur destinataire en en gardant la maîtrise.

Dans un mode de réalisation particulier, cette interface affiche une fenêtre d'outils du réseau local W_hpl_list permettant de visualiser les équipements M_Cλ_EQT1, M_Cλ_EQT2 disponibles dans le réseau local et compatibles avec le contenu M_Cλ reproduit et grâce à l'interface de cette fenêtre INT_W_hpl d'en sélectionner un pour lancer la diffusion (notamment en streaming) de ce contenu.

Dans un mode de réalisation particulier, cette interface dispose d'une fenêtre de reproduction pour une communication synchrone textuelle W_TSC notamment de type chat ou messagerie instantanée permettant à U1 et U2 d'échanger par écrit des phrases strng1, strng2, strng 3. Pour saisir une nouvelle phrase l'utilisateur destinataire sélection M_string et, une fois le texte saisi, il demande sa transmission TR.

Dans un mode de réalisation particulier, cette interface dispose d'une fenêtre de reproduction pour une communication synchrone Visio W_VSC.

D'autres modes de communication synchrone peuvent être envisagé tel que la communication audio, la communication Visio, une communication haptique (notamment pour de la messagerie instantanée en braille,) etc.

Dans une variante d'utilisation de l'invention, l'espace de partage permet à une entreprise, utilisateur source, de mettre à la disposition de sa clientèle, utilisateurs destinataires, des applications. Ainsi, par exemple, un service de surveillance santé peut être mis en place, l'application reste maîtrisée par la mutuelle de santé ou tout autre société de surveillance médicale, et des périphériques tels que des tensiomètres peuvent remontés via un hub des informations concernant le patient à surveiller à l'application pour en modifier les données et engendré un nouvel état et/ou commande, tel que notamment l'appel d'un proche, du médecin ou d'un service d'urgence.

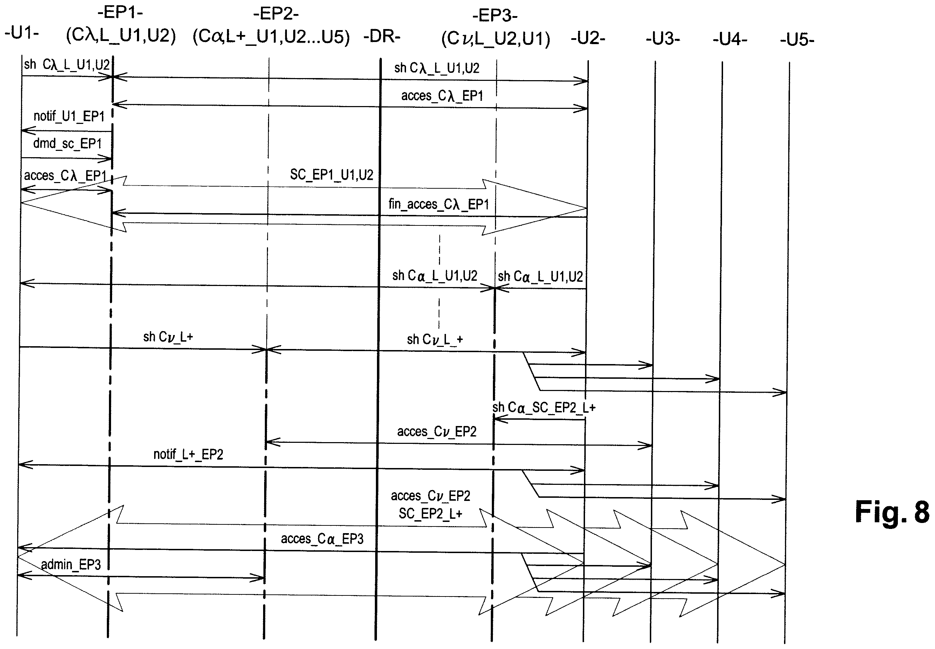

La figure 8 illustre des exemples d'échanges durant la création et l'utilisation d'espaces de partage autour de contenus selon l'invention.

Un utilisateur source U1 propose de partager sh Cλ_L_U1, U2 un contenu Cλ à un utilisateur destinataire U2 en utilisant un lien L_U1, U2 existant. Cette demande engendre la création d'un espace de partage EP1 et la transmission de cette information de partage à l'utilisateur destinataire U2.

Dans un mode de réalisation particulier, un dispositif du réseau de télécommunication DR, notamment d'un service de partage de contenus, reçoit cette demande, la transmet et déclenche la création de cet espace de partage.

L'espace de partage EP1 est créé notamment de façon à optimiser l'accès par l'utilisateur destinataire U2 et/ou à optimiser l'accès par l'utilisateur source U1 et/ou à optimiser une session de communication synchrone basée sur cet espace de partage EP1. Ainsi, l'espace de partage EP1 peut être créé dans un dispositif de communication de l'utilisateur source U1 tel qu'un terminal de communication ou dans une partie d'un serveur dans le réseau de télécommunication associé à l'utilisateur source U1 ou dans une partie SCT associé à ce service de partage de contenus

Lorsque l'utilisateur destinataire U2 accède *access*_Cλ_EP1 au contenu Cλ de cet espace de partage EP1, l'utilisateur source U1 en est informé *notif*_U1_EP1 permettant ainsi à l'utilisateur source U1 de demander *dmd_sc_*EP1 l'établissement d'une communication synchrone avec l'utilisateur destinataire U2 via cet espace de partage EP1.

Durant la communication synchrone SC_EP_U1,U2 utilisant l'espace de partage EP1 et donc le lien associé L_U1U2, l'utilisateur source peut accéder au contenu access_ Cλ_EP1. La fin *fin_access_*Cλ_EP1 d'accès au contenu par l'utilisateur destinataire U2 peut clore la session de communication synchrone SC_EP_U1,U2.

Tout utilisateur peut être utilisateur destinataire des contenus d'un tiers et utilisateur source pour ses propres contenus. En l'occurrence, l'utilisateur U2 destinataire de l'espace de partage EP1 devient utilisateur source d'un contenu Cα en proposant de le partager avec l'utilisateur U1 qui devient alors utilisateur destinataire.

L'utilisateur source U2 propose de partager sh Cα_L_U1, U2 un contenu Cα à un utilisateur destinataire en utilisant un lien L_U2, U1 qui est créé suite à cette proposition de partage. Cette demande engendre la transmission de cette information de partage à l'utilisateur destinataire U1 et la création d'un espace de partage EP3 suite à la réponse positive de l'utilisateur destinataire U1 à la création du lien et au partage.

L'utilisateur source U1 propose de partager *sh*_Cv_L+ un contenu Cv à plusieurs utilisateurs destinataires lors d'une réunion de groupe en utilisant un lien L+_U1, U2...U5 qu'il crée avec cette proposition de partage. Cette demande engendre la création d'un espace de partage EP2 et la transmission de cette information de partage à l'ensemble des utilisateurs destinataires U2...U5.

La réunion peut être démarrée automatiquement, non illustrée, au début de la plage temporelle associé à l'espace de partage EP2 dans le cadre du type d'accès en réunion de groupe déclenchant automatiquement l'accès *access*_C*v*_EP2 au contenu C*v* par l'ensemble des utilisateurs source U1 et destinataires U2...U5 et l'établissement d'une communication synchrone multiutilisateur SC_EP2_L+.

Il peut être aussi envisagé que l'accès par l'un des utilisateurs destinataires en l'occurrence U3 (sur la figure 8) déclenche la notification non seulement de l'utilisateur source U1 *notif_*L+_EP2, mais éventuellement aussi des autres utilisateurs destinataires *notif*_L+_EP2. Ainsi, dès que l'utilisateur source accède au contenu, il peut demander *dmd_sc_*EP1 l'établissement d'une communication synchrone multiutilisateur via cet espace de partage EP2 avec l'ensemble des utilisateurs accédant au contenu *Cv.* Ainsi tout utilisateur destinataire accédant ensuite au contenu sera automatiquement en communication synchrone avec les autres utilisateurs accédant au contenu C*v*.

Durant cette réunion de groupe, l'utilisateur destinataire U2 a éventuellement donné un type d'accès spécifique sh_Cα_SC_EP2_L+ à son espace de partage EP3 afin de partager son contenu Cα avec tous les utilisateurs d'une réunion à laquelle il accède même s'il ne possède pas de lien avec eux. Par exemple, pour cela, il donne des droits d'accès à son espace de partage EP3 via son lien L_U2, U1 avec l'utilisateur U1 à l'espace de partage en réunion de groupe EP2. Ainsi, tous les utilisateurs, l'utilisateur U1 destinataire de l'espace de partage EP3 et les autres utilisateurs destinataires U3...U5 de l'espace de partage en réunion de groupe accèdent à ce contenu *access*_Cα_EP3 qui subsiste dans l'espace de partage EP3 de l'utilisateur U2 qui en garde le contrôle.

A tout moment, l'utilisateur source U1 peut reprendre la main *admin*_EP3 sur le contenu de son espace de partage EP3 en modifiant le type d'accès : par exemple, uniquement reproduction suivant le mode de lecture fixé en temps réel par l'utilisateur source U1, voire en interdisant l'accès.

La session de communication pourra être close par l'utilisateur source U1 ou automatiquement à la fin de la plage temporelle d'utilisation comme illustrée.

Lors du démarrage automatique d'une réunion, les utilisateurs source U1 et destinataires U2...U5 peuvent en être informés préalablement (par exemple lors de la création de l'espace de partage et/ou dans un laps de temps courts - 5 à 15 min - avant ce démarrage avec éventuellement la possibilité pour chacun de refuser cette automatisation. Un refus d'automatisation de la part de l'utilisateur source U1 entraînera le fait que l'utilisateur source devra demander l'établissement de la communication synchrone multiutilisateur.

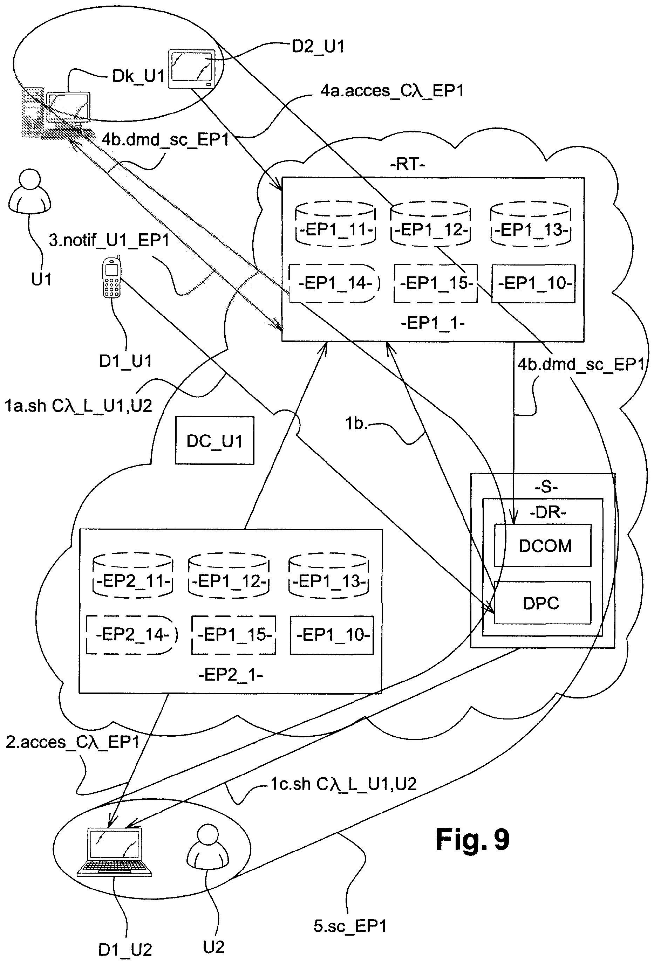

La figure 9 illustre un schéma simplifié d'espace de partages de partage autour de contenus et d'un dispositif d'un réseau de télécommunication selon l'invention.

Un dispositif d'un réseau de télécommunication DR comporte des moyens de génération DPC d'au moins un espace de partage EP1_1 autour d'au moins un contenu Cλ associé à un utilisateur source U1 d'un réseau de télécommunication RT en associant un lien L_U1,U2 entre ledit utilisateur source U1 et au moins un utilisateur destinataire U2 d'un réseau de télécommunication RT pour un type d'accès A à un contenu Cλ dudit espace de partage EP1_1, ladite association étant apte à permettre un déclenchement par l'accès *acces*_Cλ_ EP1_1 d'un utilisateur destinataire U2 à un contenu Cλ dudit espace de partage EP1_1 d'une autorisation d'un établissement de communication synchrone entre ledit utilisateur source U1 et un utilisateur destinataire U2 d'un réseau de télécommunication RT dans une utilisation dudit espace de partage EP1_1.

Dans un mode de réalisation particulier, le dispositif d'un réseau de télécommunication DR comporte des moyens DCOM d'établissement d'une communication synchrone entre ledit utilisateur source U1 et un utilisateur destinataire U2 d'un réseau de télécommunication RT lorsque ledit utilisateur destinataire U2 accède 2. *acces_*Cλ*_*EP1_1 à un contenu Cλ dudit espace de partage EP1_1, ledit accès ayant été autorisé par un lien L_U1,U2 entre ledit utilisateur source U1 et ledit utilisateur destinataire U2 pour ce type d'accès A.

L'utilisateur source U1 dispose de plusieurs dispositifs de communication dont les terminaux de communications D1_U1 (téléphone mobile), D2_U1 (télévision) et Dk_U1 (ordinateur) illustrés par la figure 9 et éventuellement des dispositifs de communication parties de serveur(s) dans le réseau de télécommunication.

L'utilisateur source U1 propose, grâce à son téléphone mobile D1_U1, de partager *1a. sh* Cλ_L_U1, U2 un contenu Cλ à un utilisateur destinataire U2 en utilisant un lien L_U1, U2 existant. Cette demande engendre la création 1b. d'un espace de partage EP1_1 et la transmission *1c. sh* 1, U2 de cette information de partage à l'utilisateur destinataire U2.

Le dispositif du réseau de télécommunication DR, en particulier les moyens de partage de contenus DPC, reçoit cette demande, la transmet et déclenche la création de cet espace de partage EP1_1.

Lorsque l'utilisateur destinataire U2 accède 2. *access_*Cλ_EP1 au contenu Cλ de cet espace de partage EP1_1, l'utilisateur source U1 en est informé *3.notif*_U1_EP1 permettant ainsi à l'utilisateur source U1 de demander *4b dmd_sc_*EP1 l'établissement d'une communication synchrone avec l'utilisateur destinataire U2 via cet espace de partage EP1 à partir par exemple de son ordinateur Dk_U1.

Le dispositif du réseau de télécommunication DR, en particulier les moyens de communications DCOM, reçoit la demande *4b dmd_sc,* et établit la communication synchrone entre l'utilisateur source U1 et l'utilisateur destinataire U2 en utilisant le lien L_U1,U2 de l'espace de partage EP1_1.

Durant la communication synchrone *5.sc_EP1* utilisant l'espace de partage EP1_1 et donc le lien associé L_U1U2, l'utilisateur source U1 peut accéder au contenu *4a. access_*Cλ_EP1 par exemple sur son écran de télévision D2_U1.

Dans un mode de réalisation particulier, un dispositif de gestion d'un service de partage de contenus S comporte un dispositif d'un réseau de communication tel que décrit ci-dessus.

Dans un mode de réalisation particulier, un dispositif de communication d'un utilisateur source U1 comporte des moyens de stockages des contenus dudit espace de partage EP1_1 autour d'au moins un contenu.

Dans un mode de réalisation particulier non illustré, un dispositif de communication d'un utilisateur source U1 comporte un dispositif du réseau de télécommunication DR tel que décrit ci dessus.

Une convergence des accès et terminaux est permet à l'utilisateur source U1 et à l'utilisateur destinataire U2 de rentrer en communication tout en visualisant l'usage du contenu resté sous le contrôle de l'utilisateur destinataire U2.

Dans un mode de réalisation particulier, des moyens de mesures de l'usage d'un espace de partage permettent d'établir une facturation à l'utilisateur source de l'accès voire de la durée d'accès à cet espace de partage non seulement par lui mais aussi par ses utilisateurs destinataires ainsi qu'une facturation de l'utilisation de communication synchrone.

### Application industrielle

L'invention présente un intérêt particulier lorsque les liens utilisés sont des liens certifiés à savoir un lien de télécommunication comportant un couple d'identifiants certifiés d'un utilisateur source et d'un utilisateur destinataire apte à permettre l'établissement d'une session de communication entre au moins un dispositif de communication d'un premier ensemble de dispositifs de communication associés audit utilisateur source et un dispositif de communication d'un second ensemble de dispositifs de communication associés audit utilisateur destinataire.

Ainsi, le lien crée est certifié permettant relier deux utilisateurs de réseau(x) de télécommunication et non leur projection dans le réseau. En outre, le lien est uniquement entre ces deux utilisateurs limitant la dimension du graphe du réseautage social pour une meilleure maîtrise du partage par l'utilisateur source. En outre, cela permet de responsabiliser l'utilisateur sur les contenus qu'il partage.

Le champ d'application de l'invention est très large, car il couvre tous les usages devenus possibles à distance grâce aux évolutions technologiques, qui s'inscrivent dans le cadre de relations fortes autour de contenus entre un individu et d'autres individus ou entre un individu et un professionnel ou une entreprise. Cette évolution est particulièrement intéressante dans le développement d'applications de télécommunication, de gestion des contenus (notamment le partage) et la gestion des objets communicants.

L'invention se situe dans le contexte technique de la convergence des terminaux, et des accès, de la mise en œuvre de communications synchrones organisées sur du contenu (au sens large, contenus ou applications), et éventuellement de l'authentification par notamment la carte SIM. L'invention propose un univers ouvert de développements d'applications partageables, notamment grâce à la définition d'API par l'opérateur.

L'invention permet à un utilisateur source de partager des contenus au sens large (contenus multimédia, application, etc.) avec des utilisateurs destinataires d'un même réseau de télécommunication ou d'un réseau de télécommunication différents, d'un même opérateur ou d'un autre opérateur, etc.

## Revendications

1. Procédé de création d'un espace de partage (1) autour d'au moins un contenu, ledit espace de partage (1) étant associé à un utilisateur source (U1) d'un réseau de télécommunication, ledit procédé de création d'espace de partage (1) comportant une association (CREA_EP_1) d'au moins un lien entre ledit utilisateur source (U1) et au moins un utilisateur destinataire (U2) d'un réseau de télécommunication pour un type d'accès à un contenu dudit espace de partage (1), ladite association (CREA_EP_1) étant apte à permettre un déclenchement d'une autorisation d'un établissement de communication synchrone entre ledit utilisateur source (U1) et un utilisateur destinataire (U2) d'un réseau de télécommunication dans une utilisation dudit espace de partage (1), **caractérisé en ce que** le déclenchement est commandé par un accès d'un utilisateur destinataire (U2) à un contenu dudit espace de partage (1).

2. Programme comprenant des instructions de code de programme pour l'exécution des étapes du procédé de création d'espace de partage (1) autour d'au moins un contenu selon la revendication précédente lorsque ledit programme est exécuté par un processeur.

3. Procédé d'utilisation d'un espace de partage (1) autour d'au moins un contenu, ledit espace de partage (1) étant associé à un utilisateur source (U1) d'un réseau de télécommunication, ledit procédé d'utilisation d'espace de partage (1) comporte un déclenchement d'une autorisation (M51) d'un établissement de communication synchrone entre ledit utilisateur source (U1) et un utilisateur destinataire (U2) d'un réseau de télécommunication dans l'utilisation dudit espace de partage (1), **caractérisé en ce que** le déclenchement est commandé par un accès d'un utilisateur destinataire (U2) à un contenu dudit espace de partage (1), ledit accès ayant été autorisé par un lien entre ledit utilisateur source (U1) et ledit utilisateur destinataire (U2) associé audit contenu pour ce type d'accès.

4. Procédé d'utilisation d'un espace de partage (1) autour d'au moins un contenu selon la revendication précédente, **caractérisé en ce que** ledit procédé d'utilisation d'espace de partage (1) comporte un accès simultané (M64) par ledit utilisateur source (U1) audit contenu accédé par l'utilisateur destinataire (U2).

5. Procédé d'utilisation d'un espace de partage (1) autour d'au moins un contenu selon l'une quelconque des revendications 3 ou 4, **caractérisé en ce que**, pour un type d'accès en réunion de groupe, la session de communication est une session de communication multiutilisateurs mettant en relation l'utilisateur source (U1) et l'ensemble des utilisateurs destinataires accédant au contenu associé à ce type d'accès spécifique.

6. Procédé d'utilisation d'espace de partage (1) autour d'au moins un contenu selon la revendication précédente, **caractérisé en ce que** ledit procédé d'utilisation d'espace de partage (1) comporte une notification (M61) dudit utilisateur source (U1) lorsque ledit utilisateur destinataire (U2) accède (M40) à un contenu (C) dudit espace de partage 1, ladite notification (M61) étant apte à permettre de déclencher l'établissement de ladite communication synchrone entre ledit utilisateur source (U1) et ledit utilisateur destinataire (U2).

7. Procédé d'utilisation d'espace de partage (1) autour d'au moins un contenu selon la revendication précédente, **caractérisé en ce que** ladite notification (M61) est apte à permettre de déclencher un accès simultané (M64) par ledit utilisateur source (U1) audit contenu accédé par l'utilisateur destinataire (U2).

8. Procédé d'utilisation d'un espace de partage (1) autour d'au moins un contenu selon l'une quelconque des revendications 3 à 7, **caractérisé en ce que** ledit procédé d'utilisation d'espace de partage (1) comporte un transfert de l'utilisateur source utilisateur (U1) vers un utilisateur délégué (U3), ledit transfert permettant de transférer du premier utilisateur (U1) à l'utilisateur délégué (U3) l'autorisation (M51) d'un établissement de communication synchrone dans l'utilisation dudit espace de partage (1),

9. Programme comprenant des instructions de code de programme pour l'exécution des étapes du procédé d'utilisation d'un espace de partage (1) autour d'au moins un contenu selon l'une quelconque des revendications 3 à 8 lorsque ledit programme est exécuté par un processeur.

10. Procédé de gestion de partage de contenus **caractérisé en ce que** le procédé de gestion de partage de contenus comporte au moins une création (CREA_EP_1) d'au moins un espace de partage (1) en associant au moins un contenu pour au moins un type d'accès à au moins un lien entre un utilisateur source (U1) associé audit espace de partage (1) et au moins un utilisateur destinataire (U2), ledit au moins un lien étant apte à permettre un déclenchement d'une autorisation (M51) d'un établissement de communication synchrone entre ledit utilisateur source (U1) et un utilisateur destinataire (U2) d'un réseau de télécommunication dans une utilisation dudit espace de partage (1), le déclenchement étant commandé par un accès d'un utilisateur destinataire (U2) à un contenu dudit espace de partage (1).

11. Programme comprenant des instructions de code de programme pour l'exécution des étapes du procédé de gestion de partage de contenus selon la revendication précédente lorsque ledit programme est exécuté par un processeur.

12. Dispositif d'un réseau de télécommunication **caractérisé en ce que** ledit dispositif du réseau de télécommunication comporte des moyens de gestion de partage de contenus (DPC) apte à permettre la génération d'au moins un espace de partage (1) autour d'au moins un contenu associé à un utilisateur source (U1) d'un réseau de télécommunication en associant un lien entre ledit utilisateur source (U1) et au moins un utilisateur destinataire (U2) d'un réseau de télécommunication pour un type d'accès à un contenu dudit espace de partage (1), ladite association étant apte à permettre un déclenchement d'une autorisation d'un établissement de communication synchrone entre ledit utilisateur source (U1) et un utilisateur destinataire (U2) d'un réseau de télécommunication dans une utilisation dudit espace de partage (1), le déclenchement étant commandé par l'accès d'un utilisateur destinataire (U2) à un contenu dudit espace de partage (1).

13. Dispositif de gestion d'un service de partage de contenus comportant un dispositif du réseau de télécommunication (DR) selon la revendication 12.

14. Dispositif de communication d'un utilisateur source (U1) comportant un dispositif du réseau de télécommunication (DR) selon la revendication selon la revendication 12.

## Patentansprüche

1. Verfahren zum Erstellen eines gemeinsamen Raums (1) um mindestens einen Inhalt, wobei der gemeinsame Raum (1) einem Quellenbenutzer (U1) eines Telekommunikationsnetzes zugeordnet ist, wobei das Verfahren zum Erstellen eines gemeinsamen Raums (1) eine Zuordnung (CREA_EP_1) von mindestens einer Verknüpfung zwischen dem Quellenbenutzer (U1) und mindestens einem Empfängerbenutzer (U2) eines Telekommunikationsnetzes für eine Zugriffsart auf einen Inhalt des gemeinsamen Raums (1) aufweist, wobei die Zuordnung (CREA_EP_1) geeignet ist, ein Auslösen einer Autorisierung einer Einrichtung einer synchronen Kommunikation zwischen dem Quellenbenutzer (U1) und einem Empfängerbenutzer (U2) eines Telekommunikationsnetzes bei einer Verwendung des gemeinsamen Raums (1) zu ermöglichen, **dadurch gekennzeichnet, dass** das Auslösen durch einen Zugriff eines Empfängerbenutzers (U2) auf einen Inhalt des gemeinsamen Raums (1) gesteuert wird.

2. Programm mit Programmcode-Anweisungen zum Ausführen der Schritte des Verfahrens zum Erstellen eines gemeinsamen Raums (1) um mindestens einen Inhalt nach dem vorausgehenden Anspruch, wenn das Programm von einem Prozessor ausgeführt wird.

3. Verfahren zum Verwenden eines gemeinsamen Raums (1) um mindestens einen Inhalt, wobei der gemeinsame Raum (1) einem Quellenbenutzer (U1) eines Telekommunikationsnetzes zugeordnet ist, wobei das Verfahren zum Verwenden des gemeinsamen Raums (1) ein Auslösen einer Autorisierung (M51) einer Einrichtung einer synchronen Kommunikation zwischen dem Quellenbenutzer (U1) und einem Empfängerbenutzer (U2) eines Telekommunikationsnetzes bei der Verwendung des gemeinsamen Raums (1) aufweist, **dadurch gekennzeichnet, dass** das Auslösen durch einen Zugriff eines Empfängerbenutzers (U2) auf einen Inhalt des gemeinsamen Raums (1) gesteuert wird, wobei der Zugriff über eine Verknüpfung zwischen dem Quellenbenutzer (U1) und dem Empfängerbenutzer (U2), der dem Inhalt für diese Zugriffsart zugeordnet ist, autorisiert wurde.

4. Verfahren zum Verwenden eines gemeinsamen Raums (1) um mindestens einen Inhalt nach dem vorausgehenden Anspruch, **dadurch gekennzeichnet, dass** das Verfahren zum Verwenden eines gemeinsamen Raums (1) einen gleichzeitigen Zugriff (M64) durch den Quellenbenutzer (U1) auf den Inhalt aufweist, auf den durch den Empfängerbenutzer (U2) zugegriffen wird.

5. Verfahren zum Verwenden eines gemeinsamen Raums (1) um mindestens einen Inhalt nach einem der Ansprüche 3 oder 4, **dadurch gekennzeichnet, dass** für eine Zugriffsart bei einer Gruppenzusammenkunft die Kommunikationssitzung eine Mehrbenutzer-Kommunikationssitzung ist, die den Quellenbenutzer (U1) und alle Empfängerbenutzer, die auf den Inhalt zugreifen, der dieser spezifischen Zugriffsart zugeordnet ist, zusammenbringt.

6. Verfahren zum Verwenden eines gemeinsamen Raums (1) um mindestens einen Inhalt nach dem vorausgehenden Anspruch, **dadurch gekennzeichnet, dass** das Verfahren zum Verwenden eines gemeinsamen Raums (1) eine Benachrichtigung (M61) des Quellenbenutzers (U1) aufweist, wenn der Empfängerbenutzer (U2) auf einen Inhalt (C) des Freigaberaums (1) zugreift (M40), wobei die Benachrichtigung (M61) geeignet ist, das Auslösen der Einrichtung der synchronen Kommunikation zwischen dem Quellenbenutzer (U1) und dem Empfängerbenutzer (U2) zu ermöglichen.

7. Verfahren zum Verwenden eines gemeinsamen Raums (1) um mindestens einen Inhalt nach dem vorausgehenden Anspruch, **dadurch gekennzeichnet, dass** die Benachrichtigung (M61) geeignet ist, das Auslösen eines gleichzeitigen Zugriffs (M64) durch den Quellenbenutzer (U1) auf den Inhalt zu ermöglichen, auf den durch den Empfängerbenutzer (U2) zugegriffen wird.

8. Verfahren zum Verwenden eines gemeinsamen Raums (1) um mindestens einen Inhalt nach einem der Ansprüche 3 bis 7, **dadurch gekennzeichnet, dass** das Verfahren zum Verwenden eines gemeinsamen Raums (1) eine Übertragung des Quellenbenutzers (U1) zu einem delegierten Benutzer (U3) aufweist, wobei die Übertragung das Übertragen der Autorisierung (M51) einer Einrichtung einer synchronen Kommunikation bei der Verwendung des gemeinsamen Raums (1) vom ersten Benutzer (U1) zu dem delegierten Benutzer (U3) ermöglicht.

9. Programm mit Programmcode-Anweisungen zum Ausführen der Schritte des Verfahrens zum Verwenden eines gemeinsamen Raums (1) um mindestens einen Inhalt nach einem der Ansprüche 3 bis 8, wenn das Programm von einem Prozessor ausgeführt wird.

10. Verfahren zum Verwalten der gemeinsamen Verwendung von Inhalten, **dadurch gekennzeichnet, dass** das Verfahren zum Verwalten der gemeinsamen Verwendung von Inhalten mindestens eine Erstellung (CREA_EP_1) von mindestens einem gemeinsamen Raum (1) aufweist, indem mindestens ein Inhalt für mindestens eine Zugriffsart mindestens einer Verknüpfung zwischen einem Quellenbenutzer (U1), der dem gemeinsamen Raum (1) zugeordnet ist, und mindestens einem Empfängerbenutzer (U2) zugeordnet wird, wobei die mindestens eine Verknüpfung geeignet ist, ein Auslösen einer Autorisierung (M51) einer Einrichtung einer synchronen Kommunikation zwischen dem Quellenbenutzer (U1) und einem Empfängerbenutzer (U2) eines Telekommunikationsnetzes bei einer Verwendung des gemeinsamen Raums (1) zu ermöglichen, wobei das Auslösen durch einen Zugriff eines Empfängerbenutzers (U2) auf einen Inhalt des gemeinsamen Raums (1) gesteuert wird.

11. Programm mit Programmcode-Anweisungen zum Ausführen der Schritte des Verfahrens zum Verwalten der gemeinsamen Verwendung von Inhalten nach dem vorausgehenden Anspruch, wenn das Programm von einem Prozessor ausgeführt wird.

12. Vorrichtung eines Telekommunikationsnetzes, **dadurch gekennzeichnet, dass** die Vorrichtung des Telekommunikationsnetzes Mittel zur Verwaltung der gemeinsamen Verwendung von Inhalten (DPC) aufweist, die geeignet sind, das Erzeugen mindestens eines gemeinsamen Raums (1) um mindestens einen Inhalt zu ermöglichen, der einem Quellenbenutzer (U1) eines Telekommunikationsnetzes zugeordnet ist, indem eine Verknüpfung zwischen dem Quellenbenutzer (U1) und mindestens einem Empfängerbenutzer (U2) eines Telekommunikationsnetzes für eine Zugriffsart einem Inhalt des gemeinsamen Raums (1) zugeordnet wird, wobei die Zuordnung geeignet ist, ein Auslösen einer Autorisierung einer Einrichtung einer synchronen Kommunikation zwischen dem Quellenbenutzer (U1) und einem Empfängerbenutzer (U2) eines Telekommunikationsnetzes bei einer Verwendung des gemeinsamen Raums (1) zu ermöglichen, wobei das Auslösen durch den Zugriff eines Empfängerbenutzers (U2) auf einen Inhalt des gemeinsamen Raums (1) gesteuert wird.

13. Vorrichtung zur Verwaltung eines Services zur gemeinsamen Verwendung von Inhalten, die eine Vorrichtung des Telekommunikationsnetzes (DR) nach Anspruch 12 aufweist.

14. Vorrichtung zur Kommunikation eines Quellenbenutzers (U1), die eine Vorrichtung des Telekommunikationsnetzes (DR) nach Anspruch 12 aufweist.

## Claims

1. Method of creating a sharing space (1) around at least one content, said sharing space (1) being associated with a source user (U1) of a telecommunication network, said method of creating sharing space (1) comprising an association (CREA_EP_1) of at least one link between said source user (U1) and at least one recipient user (U2) of a telecommunication network for a type of access with a content of said sharing space (1), said association (CREA_EP_1) being able to allow triggering of authorization of establishment of synchronous communication between said source user (U1) and a recipient user (U2) of a telecommunication network in a use of said sharing space (1), **characterized in that** the triggering is controlled by access of a recipient user (U2) to a content of said sharing space (1).

2. Program comprising program code instructions for the execution of the steps of the method of creating sharing space (1) around at least one content according to the preceding claim when said program is executed by a processor.

3. Method of using a sharing space (1) around at least one content, said sharing space (1) being associated with a source user (U1) of a telecommunication network, said method of using sharing space (1) comprises a triggering of authorization (M51) of establishment of synchronous communication between said source user (U1) and a recipient user (U2) of a telecommunication network in the use of said sharing space (1), **characterized in that** the triggering is controlled by access of a recipient user (U2) to a content of said sharing space (1), said access having been authorized by a link between said source user (U1) and said recipient user (U2) associated with said content for this type of access.

4. Method of using a sharing space (1) around at least one content according to the preceding claim, **characterized in that** said method of using sharing space (1) comprises simultaneous access (M64) by said source user (U1) to said content accessed by the recipient user (U2).

5. Method of using a sharing space (1) around at least one content according to either one of Claims 3 and 4, **characterized in that**, for a group meeting type of access, the communication session is a multiuser communication session bringing together the source user (U1) and the set of recipient users accessing the content associated with this specific access type.

6. Method of using sharing space (1) around at least one content according to the preceding claim, **characterized in that** said method of using sharing space (1) comprises a notification (M61) of said source user (U1) when said recipient user (U2) accesses (M40) a content (C) of said sharing space 1, said notification (M61) being able to make it possible to trigger the establishment of said synchronous communication between said source user (U1) and said recipient user (U2).

7. Method of using sharing space (1) around at least one content according to the preceding claim, **characterized in that** said notification (M61) is able to make it possible to trigger simultaneous access (M64) by said source user (U1) to said content accessed by the recipient user (U2).

8. Method of using a sharing space (1) around at least one content according to any one of Claims 3 to 7, **characterized in that** said method of using sharing space (1) comprises a transfer from the source user (U1) to a delegated user (U3), said transfer making it possible to transfer from the first user (U1) to the delegated user (U3) the authorization (M51) of establishment of synchronous communication in the use of said sharing space (1).

9. Program comprising program code instructions for the execution of the steps of the method of using a sharing space (1) around at least one content according to any one of Claims 3 to 8 when said program is executed by a processor.

10. Method of managing contents sharing **characterized in that** the method of managing contents sharing comprises at least one creation (CREA_EP_1) of at least one sharing space (1) by associating at least one content for at least one type of access with at least one link between a source user (U1) associated with said sharing space (1) and at least one recipient user (U2), said at least one link being able to allow triggering of authorization (M51) of establishment of synchronous communication between said source user (U1) and a recipient user (U2) of a telecommunication network in a use of said sharing space (1), the triggering being controlled by access of a recipient user (U2) to a content of said sharing space (1).

11. Program comprising program code instructions for the execution of the steps of the method of managing contents sharing according to the preceding claim when said program is executed by a processor.

12. Device of a telecommunication network **characterized in that** said device of the telecommunication network comprises means for managing contents sharing (DPC) able to allow the generation of at least one sharing space (1) around at least one content associated with a source user (U1) of a telecommunication network by associating a link between said source user (U1) and at least one recipient user (U2) of a telecommunication network for a type of access with a content of said sharing space (1), said association being able to allow triggering of authorization of establishment of synchronous communication between said source user (U1) and a recipient user (U2) of a telecommunication network in a use of said sharing space (1), the triggering being controlled by the access of a recipient user (U2) to a content of said sharing space (1) .

13. Device for managing a contents sharing service comprising a device of the telecommunication network (DR) according to Claim 12.

14. Communication device of a source user (U1) comprising a device of the telecommunication network (DR) according to Claim 12.
